(19) Europäisches Patentamt
European Patent Office
Office européen des brevets

(11) **EP 2 107 226 B1**

(12) **FASCICULE DE BREVET EUROPEEN**

(45) Date de publication et mention
de la délivrance du brevet:
**20.07.2011 Bulletin 2011/29**

(51) Int Cl.:
*F02B 41/08* *(2006.01)* *F02B 41/06* *(2006.01)*
*F01L 1/047* *(2006.01)*

(21) Numéro de dépôt: **09008809.7**

(22) Date de dépôt: **21.05.2008**

(54) **Moteur à combustion interne d'encombrement minimal**

Verfahren zur Verbesserung eines Verbrennungsmotors

Method for improving an internal combustion engine

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **24.05.2007 BE 200700255**

(43) Date de publication de la demande:
**07.10.2009 Bulletin 2009/41**

(62) Numéro(s) de document de la (des) demande(s)
initiale(s) en application de l'article 76 CBE:
**08447026.9 / 1 995 430**

(73) Titulaire: **Schmitz, Gerhard
4780 Saint-Vith (BE)**

(72) Inventeur: **Schmitz, Gerhard
4780 Saint-Vith (BE)**

(74) Mandataire: **Cauchie, Daniel
Office Parette (Fred Maes),
Avenue Gabrielle Petit 2
7940 Brugelette (BE)**

(56) Documents cités:
**EP-A- 0 006 747     AU-A- 4 837 479
DE-A1- 2 947 280     FR-A- 1 058 109
US-A- 1 111 841      US-A- 1 998 706
US-A- 5 076 220**

**Description**

La présente invention se rapporte, d'une manière générale, à un moteur à combustion interne.

Plus précisément, l'invention concerne un moteur à combustion interne qui comprends au moins un cylindre du type comprenant une chambre de travail de volume variable par le déplacement dans ce cylindre d'un piston entre une position de point mort haut et une position de point mort bas, à chaque tel cylindre étant associés des moyens d'admission et d'évacuation d'un fluide gazeux, le piston de chaque tel cylindre étant relié à un arbre vilebrequin dudit moteur, ce moteur utilisant:

a) d'une part, au moins un tel cylindre fonctionnant en cylindre basse pression suivant un mode du type deux temps, qui comprennent l'admission accompagnée de la détente produisant un travail utile au cours de chaque course du piston de ce cylindre basse pression vers son point mort bas et l'échappement d'un fluide gazeux au cours de chaque course du piston vers son point mort haut, et,

b) d'autre part, deux tels cylindres fonctionnant en cylindres comburants haute pression suivant un mode du type quatre temps, qui comprennent l'admission de l'air ou d'un mélange air-combustible au cours de la première course du piston de chacun desdits cylindres comburants vers son point mort bas, la compression de l'air ou d'un mélange air-combustible au cours de la première course du piston vers son point mort haut, suivie de la combustion, la détente des gaz comburés au cours de la deuxième course du piston vers son point mort bas produisant un travail utile et le refoulement des gaz comburés au cours de la deuxième course du piston vers son point mort haut, la cylindrée de chacun des cylindres comburants étant inférieure à celle du cylindre basse pression, ces cylindres comburants, également dénommés cylindres haute pression, refoulant alternativement leurs gaz comburés vers le cylindre basse pression en vue d'une deuxième détente des gaz comburés.

Le moteur à combustion interne à cinq temps, décrit dans le brevet européen N° 1201892 (Gerhard Schmitz) ou le brevet des Etats-Unis d'Amérique N° 6553977 (Gerhard Schmitz) est fondamentalement un moteur à trois cylindres rangée en lignes. Les deux cylindres aux extrémités du vilebrequin, appelés cylindres haute pression (HP), ont des cylindrées égales et nettement plus petites que celle du cylindre central, appelé lui cylindre basse pression (BP). Les deux pistons des cylindres HP se déplacent en parfaite phase entre eux et en opposition de phase par rapport au piston du cylindre BP. Les deux cylindres HP sont alimentés, de préférence par un mélange air/combustible pré comprimé au cours de la première course descendante du piston du cylindre HP. En remontant la première fois, le piston du cylindre HP comprime le mélange air/combustible admis, ce mélange étant brûlé lorsque le piston du cylindre HP est proche de son point mort haut (PMH), ce qui fait augmenter fortement la pression à l'intérieur du cylindre HP. Ce gaz comburé est détendu une première fois pendant la deuxième course descendante du piston du cylindre HP. Quand le piston du cylindre HP atteint son point mort bas (PMB), le piston du cylindre BP, quant à lui, s'approche de son PMH: à ce moment, une communication entre le cylindre HP et le cylindre BP est établie. Pendant la deuxième course du piston du cylindre HP vers son PMH, le piston du cylindre BP descendant vers son PMB, le gaz comburé est transvasé du cylindre HP vers le cylindre BP et, la cylindrées du cylindre BP étant nettement plus grande que celle du cylindre HP, le gaz comburé est détendu une deuxième fois. Quand le piston du cylindre HP atteint son PMH et le piston du cylindre BP son PMB, la communication entre les cylindres HP et BP va être interrompue pendant que la soupape d'échappement du cylindre BP va commencer à s'ouvrir et le rester pendant la course ascendante du piston du cylindre BP afin de permettre finalement l'échappement des gaz comburés du moteur. Pendant le même temps, le piston du cylindre HP redescend et commence un nouveau cycle en aspirant un nouveau mélange air/combustible. L'autre cylindre HP, quant à lui, réalise le même cycle que le premier cylindre HP, mais avec un retard équivalent à un angle de 360° au niveau du vilebrequin par rapport au premier, de manière que le second cylindre HP puisse transvaser ses gaz comburés vers le même cylindre BP pendant que le piston de ce dernier descend la deuxième fois, et ainsi de suite.

La présente invention a pour but de proposer un moteur à combustion interne qui permet d'améliorer ce moteur de l'état de la technique.

Pour atteindre ce but, un moteur du type indiqué précédemment est, selon un de ses aspects, caractérisé en ce que les manivelles du vilebrequin, auxquelles sont reliées les bielles attachées aux pistons des cylindres haute pression alimentant alternativement un même cylindre basse pression, sont parallèles entre elles et forment avec la manivelle, à laquelle est reliée la bielle attachée au piston du cylindre basse pression en question, un angle sensiblement plus petit que 180°, de l'ordre de 90°, de façon à ce que le piston du cylindre basse pression atteigne son point mort haut sensiblement avant que les pistons des cylindres haute pression adjacents n'atteignent leur point mort bas respectif.

Cette configuration permet d'optimiser le rapport de détente global du cycle réalisé dans le moteur. Ce rapport ou taux de détente global est défini de la manière suivante:

## Taux de détente globale = taux HP x taux BP

où le taux HP est égal au volume intermédiaire du cylindre HP divisé par le volume mort de ce cylindre HP (c'est-à-dire le volume de la chambre de combustion), ledit volume intermédiaire du cylindre HP étant le contenu de ce cylindre haute pression au moment où le piston du cylindre basse pression se trouve en son PMH, et

où le taux BP est égal au maximum du volume total contenu à la fois dans le cylindre HP, dans le canal de transvasement et dans le cylindre basse pression, ce maximum étant atteint lors de la course descendante du piston du cylindre BP, divisé par le volume intermédiaire défini ci-dessus.

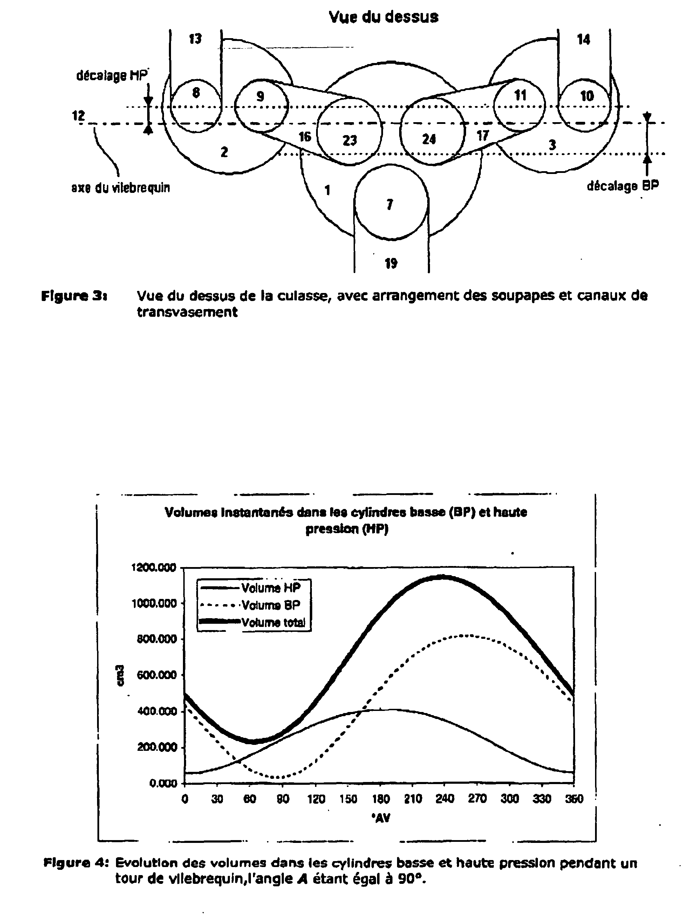

Toutefois, ce volume maximal, de l'ordre de 30° AV (c'est-à-dire pour un angle avant ou Av de 30° du vilebrequin, à savoir un angle AV de 30° entre les manivelles des cylindres HP et la position verticale haute ou position de l'axe des cylindres HP au PMH), sera obtenu avant que le piston du cylindre BP n'atteigne son PMB (voir Figure 4). Ceci est du au fait que les vitesses des pistons des cylindres HP et BP ne sont pas uniformes en raison de la cinématique manivelle/bielle.

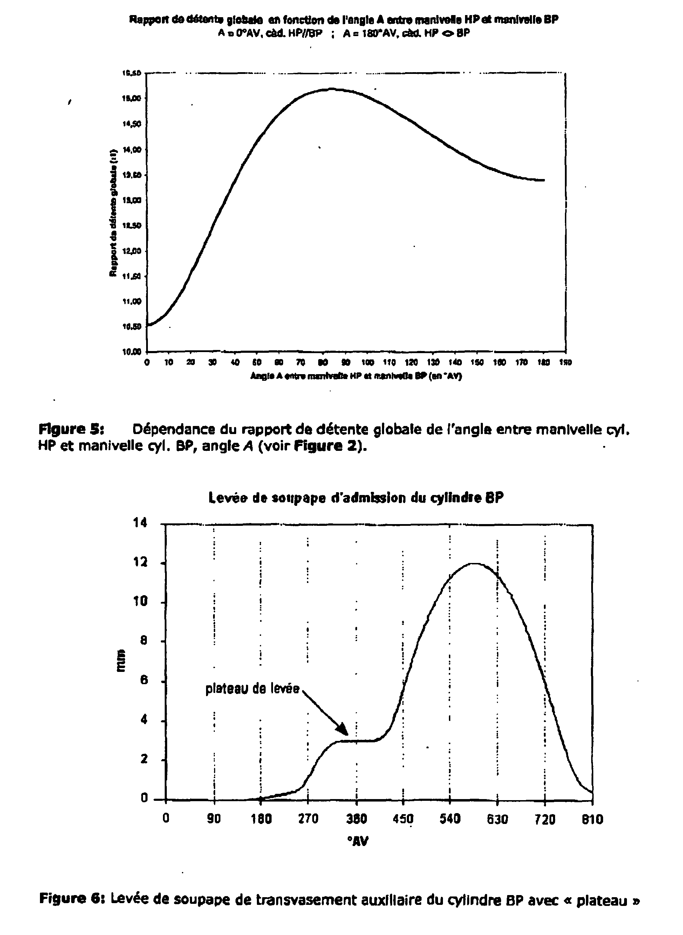

Si pour des raisons mécaniques et thermodynamiques les autres paramètres géométriques sont fixée c'est-à-dire les cylindrées des cylindres HP et BP, les taux de compression volumétrique des cylindres HP et BP, le volume du canal de transvasement et les rapports bielles/manivelles, le taux global de détente, dans ce cas, n'est plus fonction que de l'angle A, angle que forment les manivelles HP (parallèles entre elles) avec la manivelle du cylindre BP reliée au piston du cylindre BP correspondant (voir Figure 5). Dans le cas où ces autres paramètres géométriques prennent des valeurs courantes, voire techniquement possibles, à savoir rapport de compression et ou détente volumétrique du cylindre BP de l'ordre de 32 et volume du canal de transvasement égal à environ 6% de la cylindrée du cylindre BP, ce taux de détente global du moteur est atteint si l'angle A est proche de 90°.

En raison du fait que le volume au cours de la deuxième détente est déjà atteint avant que le piston du cylindre BP n'atteigne son PMB (environ 30° AV avant PMB), la durée disponible pour l'échappement peut être augmentée de ce temps ou, d'une autre manière, l'ouverture de la ou des soupapes d'échappement du cylindre BP peut être ainsi avancée d'environ 30° AV. L'évacuation des gaz comburés résiduels de la chambre de combustion du cylindre HP peut être également améliorée grâce à cette avance de l'ouverture d'échappement du cylindre BP. En effet, le susdit volume maximal total étant atteint quand le piston du cylindre HP se trouve à peine à mi-hauteur dans son cylindre l'échappement du cylindre BP sera, par conséquent, déjà ouvert pendant la montée restante du piston du cylindre HP. Il y a, en conséquence, intérêt à maintenir la ou les soupapes de transvasement ouvertes pendant toute cette durée afin d'évacuer davantage les gaz comburés résiduels de la chambre de combustion du cylindre HP pour réduire au maximum à portion de gaz comburés résiduels dans la charge fraîche à comburer lors du cycle suivant.

En outre, selon un autre de ses aspects, un moteur du type indiqué précédemment est caractérisé en ce que l'axe des cylindres haute pression est déplacé par rapport à l'axe du vilebrequin de façon à ce que la manivelle, à laquelle est attachée la bielle du piston du cylindre haute pression, se trouve du même côté, par rapport à l'axe du vilebrequin, que l'axe du cylindre haute pression en question au moment où le piston de ce cylindre haute pression, se trouvant à mi-chemin entre son point mort haut et son point mort bas, est en train de descendre et en ce que l'axe du cylindre basse pression est déplacé par rapport à l'axe du vilebrequin de façon à ce que la manivelle, à laquelle est attachée la bielle du piston de ce cylindre basse pression, se trouve du même côté, par rapport à l'axe du vilebrequin, que l'axe du cylindre basse pression en question au moment où le piston de ce cylindre basse pression, se trouvant à mi-chemin entre son point mort bas et son point mort haut, est en train de monter.

En outre, selon une autre caractéristique de l'invention, le moteur à combustion interne comporte deux rangées de trois cylindres en ligne, ces rangées formant un angle entre elles de 180° et se trouvant de part et d'autre d'un même vilebrequin unique à trois manivelles, les deux manivelles se trouvant aux extrémités de ce vilebrequin étant parallèles et reliées aux pistons des cylindres haute pression par les bielles correspondantes, la troisième manivelle se trouvant au milieu et étant reliée aux pistons des cylindres basse pression par les bielles correspondantes, cette dernière manivelle formant un angle d'environ 90° avec les deux autres manivelles, de sorte que les pistons des cylindres basse pression atteignent leur point mort haut respectif sensiblement avant que les pistons des cylindres haute pression adjacents n'atteignent leur point mort bas respectif.

Par ailleurs, selon une autre caractéristique de l'invention, le moteur à combustion interne comporte des canaux de transvasement qui comprennent chacun une soupape principale de transvasement, ou soupape d'échappement du cylindre HP, et une soupape auxiliaire de transvasement laquelle fonctionne comme soupape d'admission du cylindre basse pression, la soupape principale de transvasement et cette soupape auxiliaire de transvasement du canal de transvasement qui aboutit au cylindre haute pression correspondant étant configurées de manière que ladite soupape auxiliaire s'ouvre sensiblement avant que le piston du cylindre basse pression n'atteigne son point mort haut, instant proche duquel va démarrer le transvasement des gaz comburés du cylindre haute pression correspondant à travers ledit canal de transvasement de sorte que ce canal de transvasement est mis sous pression par une partie des gaz comburés résiduels contenus dans le cylindre basse pression avant que ne s'ouvre la soupape principale de transvasement fonctionnant comme soupape d'échappement dudit cylindre haute pression correspondant et obturant ledit canal de transvasement du côté de ce cylindre haute pression et sans que ne s'accroisse de manière trop importante la profondeur de la pochette de soupape aménagée dans la surface supérieure du piston du cylindre basse pression pour éviter tout contact entre la soupape auxiliaire de transvasement et le piston du cylindre basse pression.

En outre, selon une caractéristique supplémentaire de l'invention, le cylindre basse pression du moteur à combustion interne comporte une ou plusieurs soupapes d'échappement commandées par un arbre à cames tournant à la vitesse du vilebrequin. D'autre part, selon une autre caractéristique de l'invention, l'arbre à cames en question est doté de masses d'équilibrage disposées et dimensionnées de manière à réduire les vibrations du moteur engendrées par d'autres masses existantes et se déplaçant au la fréquence de rotation du vilebrequin.

L'invention sera mieux comprise et d'autres buts, caractéristiques et avantages de celle-ci apparaîtront plus clairement au cours de la description qui va suivre faite en référence aux dessins schématiques donnés uniquement à titre d'exemples illustrant des modes de réalisation de l'invention et dans desquels:

- la figure 1 est une représentation schématique et en perspective du vilebrequin d'un moteur à combustion interne à cinq temps selon l'état de la technique,
- la figure 1a est une représentation schématique et en perspective du vilebrequin d'un moteur à combustion interne à quatre temps et demi selon l'invention,
- la figure 2 est une vue schématique frontale des axes des cylindres sans culasse par rapport au vilebrequin et de l'angle réduit entre les manivelles des cylindres HP d'une part et la manivelle du cylindre BP d'autre part,
- la figure 3 est une vue schématique en plan de la culasse des cylindres HP et du cylindre BP, avec arrangement des soupapes et canaux de transvasement,
- la figure 4 est une représentation graphique du diagramme d'évolution des volumes dans le cylindre BP et les cylindres HP pendant un tour de vilebrequin, l'angle A entre les manivelles des cylindres HP et la manivelle du cylindre BP étant égal à 90°,
- la figure 5 est une représentation graphique du rapport de détente en fonction de l'angle A entre les manivelles des cylindres HP et la manivelle du cylindre BP,
- la figure 6 est une représentation graphique de la levée de la soupape auxiliaire de transvasement du cylindre BP avec «plateau»,
- les figures 7 et 7a, 8 et 8a, 9 et 9a, 10 et 10a, 11 et 11a, 12 et 12a, 13 et 13a, 14 et 14a sont respectivement des vues frontales et latérales du moteur selon l'invention avec vilebrequin à respectivement 5°, 95°, 185°, 275°, 365°, 455°, 545°, 635° après le PMH d'admission dans le cylindre HP gauche,
- la figure 15 est une légende graphique pour le description du fonctionnement du moteur à combustion interne aux figures 16 et 17,
- les figures 16 , 17 , 18 et 19 sont des représentations schématiques du fonctionnement d'un moteur à combustion interne à quatre temps et demi comprenant deux rangées de 3 cylindres opposés et dont le vilebrequin est positionné respectivement à 0° , 90°, 180° et 270°.

Dans ces figures, différents éléments du moteur selon l'invention sont représentés schématiquement lesquels sont référencés comme suit:

| 1 : | cylindre basse pression |
|---|---|
| 2 : | cylindre haute pression |
| 3 : | cylindre haute pression |
| 4 : | piston du cylindre basse pression |
| 5 : | piston du cylindre haute pression |
| 6 : | piston du cylindre haute pression |
| 7 : | soupape d'échappement du cylindre basse pression |
| 8 : | soupape d'admission du cylindre haute pression |
| 9 : | soupape principale de transvasement ou soupape d'échappement du cylindre haute pression |
| 10: | soupape d'admission du cylindre haute pression |
| 11: | soupape principale de transvasement ou soupape d'échappement du cylindre haute pression |
| 12: | vilebrequin |
| 13: | tubulure d'admission du cylindre haute pression |
| 14: | tubulure d'admission du cylindre haute pression |
| 16: | canal de transvasement |
| 17: | canal de transvasement |

19:     tubulure d'échappement du cylindre basse pression
23:     soupape auxiliaire de transvasement ou soupape d'admission du cylindre basse pression
24:     soupape auxiliaire de transvasement ou soupape d'admission du cylindre basse pression
25:     poche de soupape
26:     manivelle à laquelle est attaché le piston du cylindre basse pression
27:     manivelle à laquelle est attaché le piston du cylindre haute pression
28:     bielle du cylindre basse pression
29:     bielle du cylindre haute pression

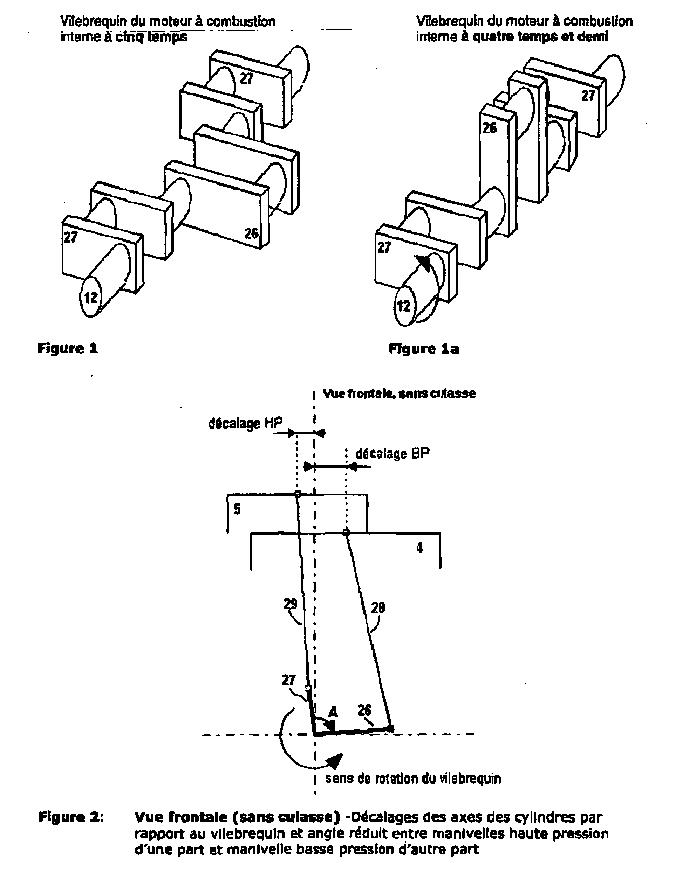

1. A la Figure 1a, l'angle entre les manivelles 27 reliées aux pistons des cylindres HP et la manivelle 26 reliée au piston du cylindre BP, qui est normalement égal à 180°, est fortement réduit à une valeur proche de 90°, de façon à ce que le « retard » du piston 4 du cylindre BP sur les pistons 5 des cylindres HP soit réduit, tel que représenté par l'angle A à la Figure 2.

Cette modification conduit à un « rapprochement » des cycles se déroulant dans les cylindres HP et le cylindre BP respectivement. Plus cet angle est petit, plus les cylindres HP contribuent au volume total de détente (voir Figure 4) et par conséquent plus grand est le rapport global de détente, les différentes cylindrées haute et basse pression restant inchangées. Ceci n'est vrai qu'en théorie où l'espace mort du cylindre basse pression, y compris les volumes des canaux de transvasement, serait égal à zéro. La Figure 5 montre l'évolution du rapport total de détente dans un cas réaliste, càd. où l'espace mort du cylindre basse pression n'est pas égal à zéro. En effet, si l'angle en question est nettement plus petit que 180°, p. ex. 90°, la deuxième détente du cycle initial à cinq temps démarre au moment où le piston du cylindre haute pression 5 descendant se trouve à mi-chemin entre PMH et PMB. Par conséquent, la première détente, qui se déroule uniquement dans le cylindre haute pression, n'est accomplie qu'à moitié au moment où la deuxième détente faisant intervenir les deux cylindres, haute et basse pression, démarre. En d'autres termes, la détente globale, qui est réalisée lors de la mise en oeuvre du moteur selon l'invention, est le rapport entre le volume au moment de la combustion, càd. l'espace mort du cylindre HP, et le volume maximal occupé par les gaz comburés avant l'échappement, càd. la somme du volume dans le cylindre BP quand le piston 4 se trouve proche de son PMB et le volume du cylindre HP, son piston 5 se trouvant à « mi-chemin » entre PMB et PMH. Pour cette raison, le moteur à combustion interne selon l'invention peut être qualifié de « moteur à combustion interne à quatre temps et demi ». Cette augmentation du rapport global de détente conduit à un meilleur rendement énergétique du moteur. Ce « rapprochement » des cycles, se déroulant dans les parties haute et basse pression, a en plus comme effet de réduire le temps total de séjour des gaz comburés sous pression à l'intérieur du moteur, càd. la durée s'écoulant entre allumage et ouverture de la soupape d'échappement. Ce temps de séjour est de l'ordre de 360°AV (avant) dans le moteur à combustion interne à cinq temps et ne sera plus que 270°AV dans le moteur avec un angle A du vilebrequin de 90°. Par conséquent les pertes thermiques globales travers les parois du bloc moteur vont être réduites. En effet le niveau global de température et de pression n'étant pas altéré par la modification en question, les pertes thermiques à travers les parois vont être réduites par simple effet d'un temps de séjour réduit.

2. L'axe des cylindres HP est déplacé par rapport au vilebrequin de la manière suivante. Si l'on se place « devant » càd. face au monteur, dans la prolongation de l'axe du vilebrequin, l'axe des cylindres HP étant vertical et le vilebrequin tournant dans le sens anti-horlogique, l'axe des cylindres HP est alors déplacé vers la gauche par rapport à l'axe du vilebrequin. Si le moteur tourne dans le sens horlogique, l'axe des cylindres HP est alors déplacé vers la droite. L'axe du cylindre BP est déplacé dans le sens opposé du déplacement de l'axe des cylindres HP par rapport au vilebrequin.

Ces modifications sont apportées pour pouvoir optimiser l'arrangement des soupapes du cylindre BP dans le but de profiter au maximum de l'espace disponible en diminuant en même temps le volume des canaux de transvasement le plus possible et ce, en réduisant leurs longueurs au maximum (voir Figure 3). Ces déplacements latéraux des axes des cylindres contribuent, eux aussi au « rapprochement » angulaire ou temporel des cycles thermodynamiques se déroulant respectivement dans les cylindres HP et BP, dont il a été question au point 1 précédent. En effet, suite à ces déplacements latéraux, le piston du cylindre BP atteint son point mort haut avant que les pistons des cylindres HP n'atteignent leurs points morts bas respectifs, même dans le cas d'un moteur à combustion interne à cinq temps « classique » à vilebrequin plat, càd. dont les manivelles des cylindres HP et BP forment un angle de 180°.

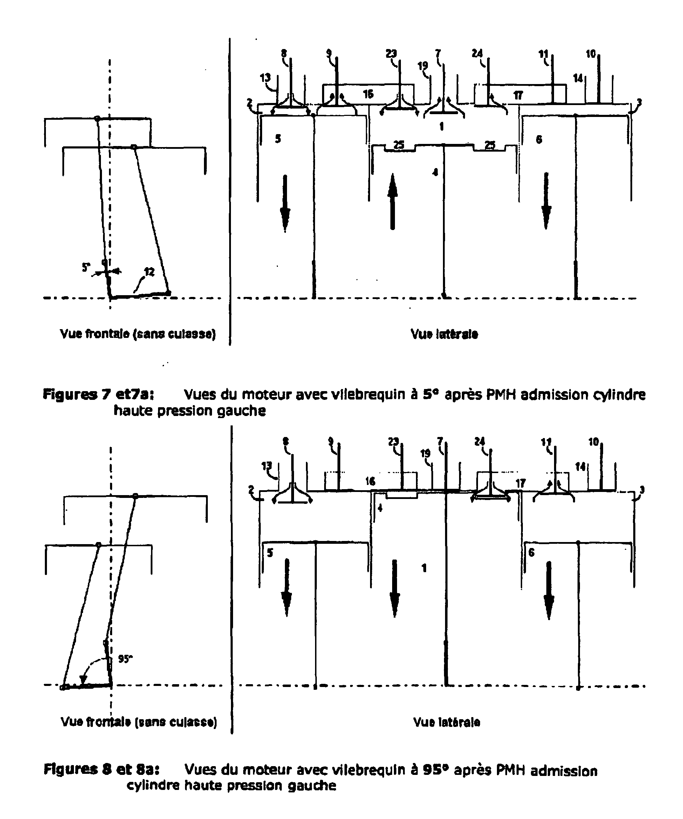

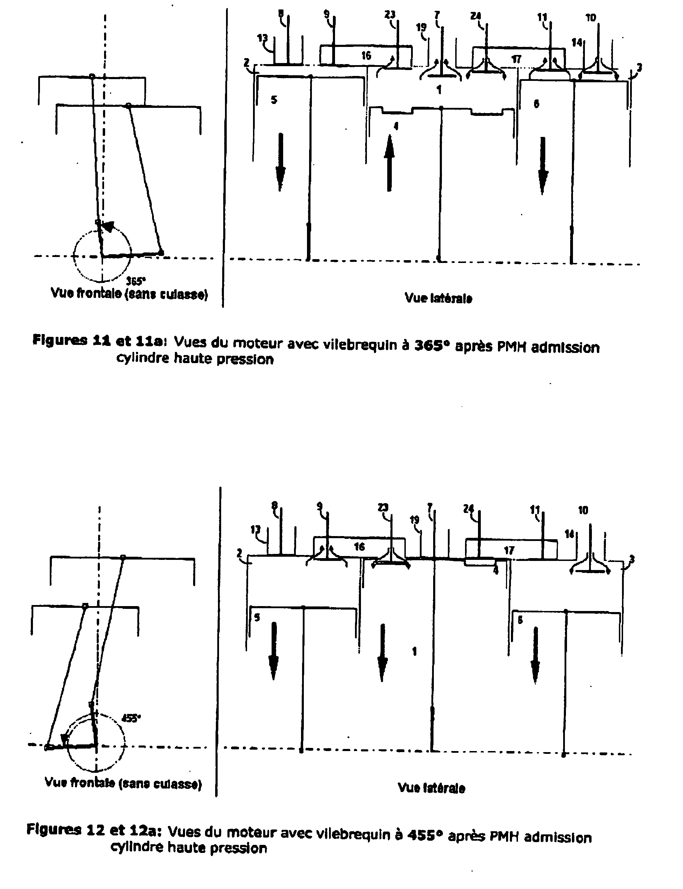

3. Chaque canal de transvasement 16,17 reliant un cylindre HP au cylindre BP peut être doté d'une soupape auxiliaire, celles-ci étant référencées respectivement 23 et 24 à la Figure 3, ce qui équivaut à munir le cylindre BP d'une soupape d'admission pour les gaz comburés. La levée de cette dernière est caractérisée par l'apparition d'un « plateau » du côté ouverture de sorte que l'ouverture de la soupape en question peut être avancée par rapport au PMH du piston BP sans que les poches 25 de soupape, à la Figure 7, aménagées dans la face supérieure du piston du cylindre BP 4 pour pouvoir accueillir les soupapes, ne deviennent trop profondes (voir Figure 8a, soupape 24 ainsi que Figure 12a, soupape 23). Cette avance d'ouverture des soupapes en question sert à mettre le canal de transvasement en question sous pression juste avant que la connexion entre cylindres HP et BP à travers le canal en question soit réalisée. Ceci procure un avantage thermodynamique en évitant une augmentation défavorable d'entropie, qui elle serait la conséquence d'une chute de pression trop importante au moment de l'ouverture de la soupape d'échappement du cylindre HP.

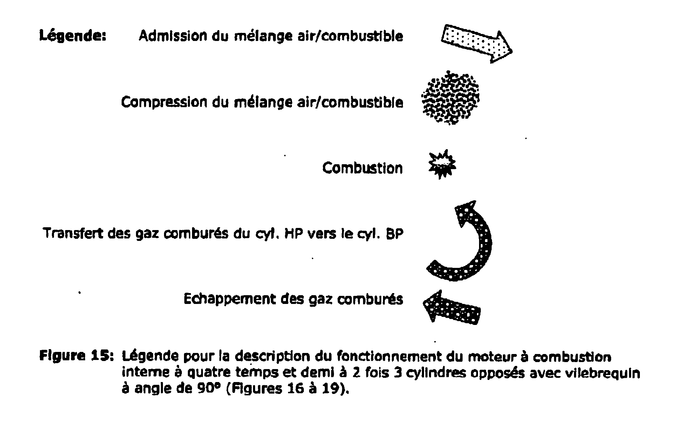

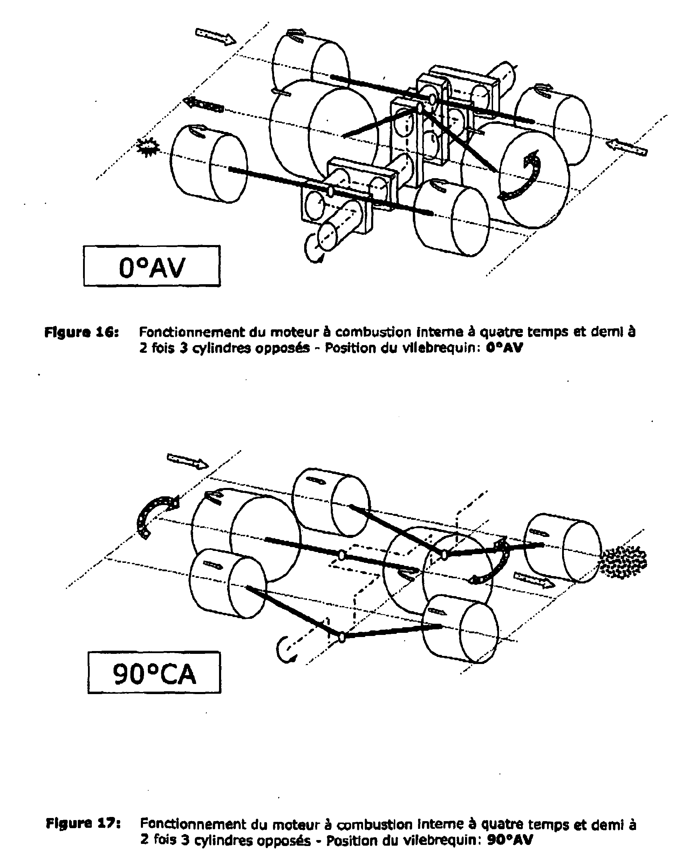

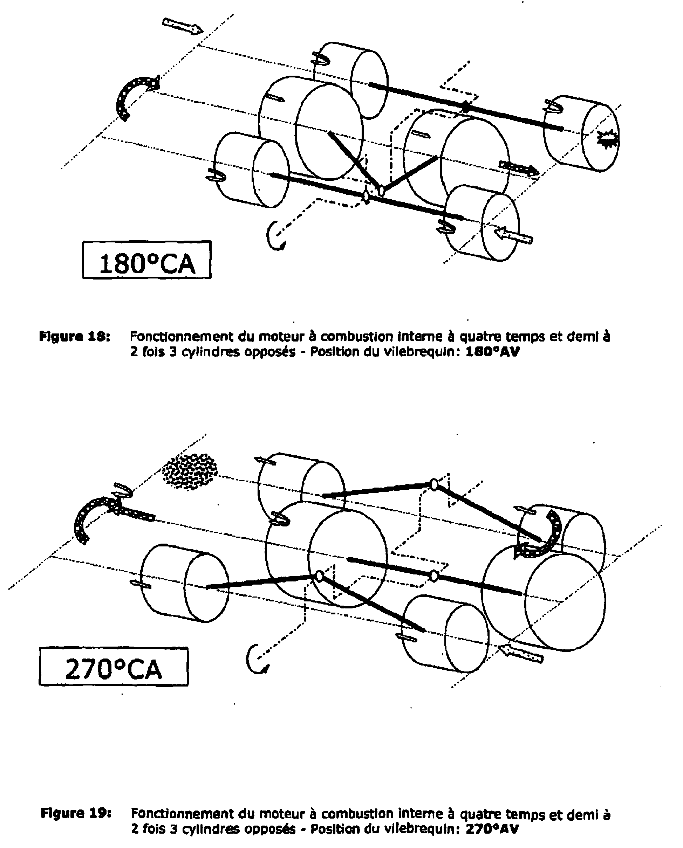

4. Un moteur, selon l'invention, à quatre temps et demi conçu sous la forme d'un moteur à deux fois 3 cylindres opposés avec un vilebrequin, dont l'angle entre les manivelles des cylindres HP et BP est de 90°, a l'avantage de réaliser une course à puissance tous les 90° d'angle du vilebrequin (Figure 15 à Figure 19). Dans cette réalisation le vilebrequin est constitué de trois manivelles. Les deux manivelles se trouvant aux extrémités du vilebrequin sont reliées chacune aux pistons des deux cylindres HP se déplaçant dans les cylindres correspondants arrangés de manière opposée. La manivelle centrale est reliée, quant à elle, aux pistons des deux cylindres BP qui, eux aussi, se déplacent dans deux cylindres BP arrangés de manière opposée. Dans une telle réalisation du moteur à quatre temps et demi, il sera difficile de profiter des avantages offerts par le déplacement des axes des cylindres hors l'axe du vilebrequin. En effet, s'il s'avère utile de profiter de ce déplacement, il apparaîtra nécessaire de positionner les soupapes d'échappement des cylindres BP des deux côtés du bloc moteur (pour un cylindre BP « au-dessus » et pour l'autre cylindre BP « en-dessous » du bloc moteur).Ceci va conduire à un arrangement des tubulures d'échappement moins favorable au point de vue espace nécessaire.

5. Dans le cas où deux arbres à cames sont présents, dont un ne commande que les soupapes d'échappement du cylindre BP, celui-ci peut tourner à la vitesse du vilebrequin, puisque la(les) soupape(s) d'échappement du cylindre BP doit (doivent) s'ouvrir à chaque tour du vilebrequin, le cylindre BP travaillant en fait suivant un cycle à deux temps, si on le considère d'une manière isolée. Cette modification n'apporte pas d'avantages au cycle thermodynamique, mais permet un profil de came avantageux au point de vue pression de contact entre came et appui (pression Hertz). Comme cet arbre tourne à la vitesse du vilebrequin, il est possible d'envisager d'en profiter afin d'y prévoir des masses pour équilibrer les forces mécaniques engendrées par les masses qui se déplacent à la fréquence de rotation du vilebrequin, càd. les pistons et les manivelles du vilebrequin lui-meme.

## Description détaillée des cycles thermodynamiques dans le moteur selon l'invention à trois cylindres

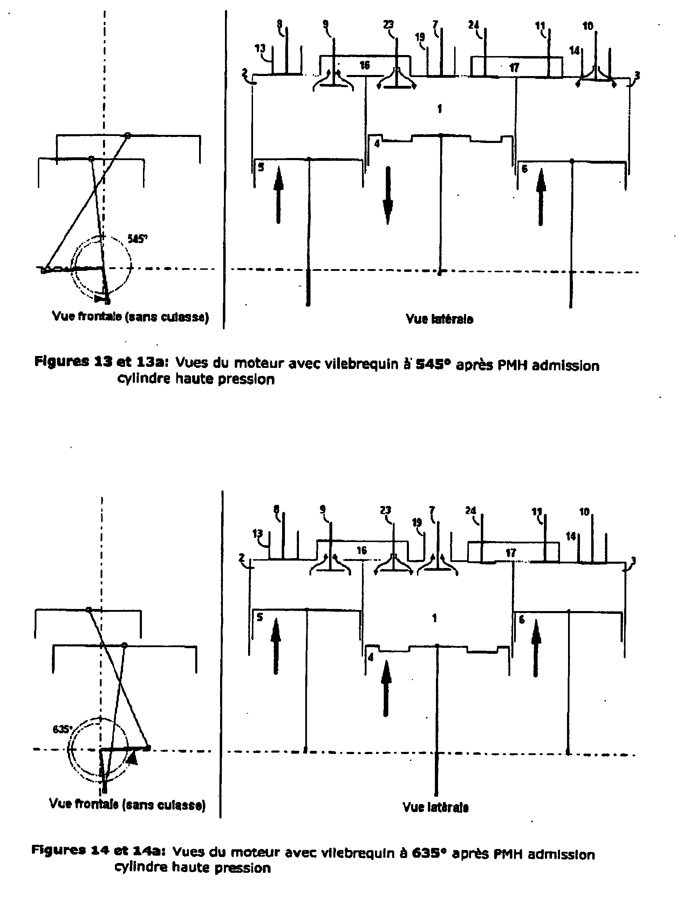

Les cycles thermodynamiques qui sont réalisés lors d'une mise en oeuvre du moteur selon l'invention dans le cas où celui-ci correspond à un moteur à trois cylindres et dont l'angle entre les manivelles des cylindres HP et la manivelle du cylindre BP du vilebrequin 12 est égal à 90°, sont décrits en détails ci-après en se référant aux Figures 7,7a à 14,14a. Celles-ci montrent respectivement une vue frontale (sans culasse) et une vue latérale schématiques du moteur à quatre temps et demi à trois cylindres pour une position angulaire du vilebrequin donnée.

**Figures 7 et 7a.** Les manivelles des cylindres HP se trouvent à un angle égal à 5° par rapport à la position verticale haute. Le piston 5 du cylindre HP à gauche entame sa descente et est en train d'admettre un nouveau mélange air/combustible à travers la soupape d'admission 8 du cylindre HP 2, qui vient de s'ouvrir. La soupape d'échappement 9 du cylindre HP à gauche est en train de se fermer et permet le balayage des gaz comburés résiduels vers le cylindre BP 1 à travers le canal de transvasement 16 à gauche par l'arrivée du mélange frais. Le piston 4 du cylindre BP central est en train de monter et chasse la grande partie des gaz comburés vers le système d'échappement à travers la soupape d'échappement 7 du cylindre BP, qui est ouverte. Une partie des gaz d'échappement est envoyée vers le canal de transvasement 17 à droite à travers la soupape auxiliaire de transvasement 24 à droite, dont la levée est celle du « plateau » d'ouverture mentionnée ci-dessus (voir Figure 6). A l'intérieur du cylindre HP 3 à droite vient se dérouler la combustion tandis que le piston correspondant 6 vient d'entamer sa descente. Les deux soupapes correspondantes 10, 11 sont fermées.

**Figures 8 et 8a.** Les manivelles des cylindres HP se trouvent à un angle égal à 95° par rapport à la position verticale haute. Le piston 5 du cylindre HP à gauche continue sa descente et est en train d'admettre un nouveau mélange air/combustible à travers la soupape d'admission 8 du cylindre HP 2, qui est ouverte. La soupape d'échappement 9 du cylindre HP à gauche est fermée. Le piston 4 du cylindre BP central vient de passer par son PMH, entame sa descente et commence à admettre les gaz comburés en provenance du cylindre HP 3 à droite lesquels passent à travers la soupape d'échappement 11 du cylindre HP à droite, le canal de transvasement 17 du côté droit et la soupape auxiliaire de transvasement 24 à droite, les deux soupapes étant ouvertes. La soupape d'échappement 7 du cylindre BP et la soupape auxiliaire de transvasement 23 à gauche sont fermées. Le piston 6 du cylindre HP à droite poursuit sa descente et se trouve à mi-chemin entre ses PMH et PMB, en poursuivant la détente des gaz comburés et en produisant ainsi un travail utile.

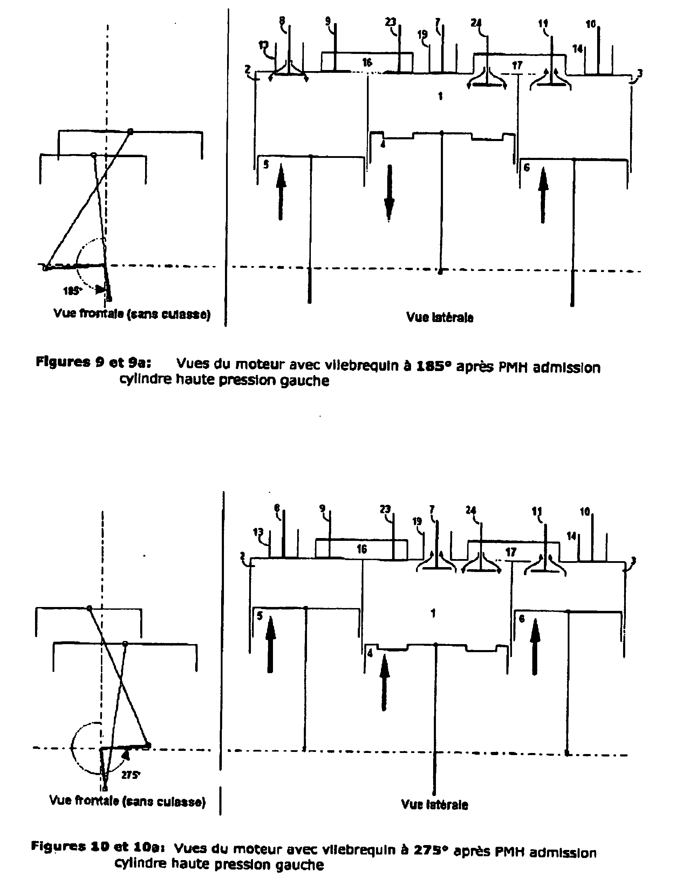

**Figures 9 et 9a.** Les manivelles des cylindres HP se trouvent à un angle égal à 185° par rapport à la position verticale haute. Le piston 5 du cylindre HP à gauche entame sa remontée et va comprimer le nouveau mélange air/combustible. La soupape d'admission 8 du cylindre HP à gauche va bientôt se fermer. La soupape d'échappement 9 du cylindre HP à gauche est fermée. Le piston 4 du cylindre BP central continue sa descente et se trouve à mi-chemin entre ses PMH et PMB et continue à admettre les gaz comburés en provenance du cylindre HP 3 à droite lesquels passent à travers la soupape d'échappement 11 du cylindre HP à droite, le canal de transvasement 17 à droite et la soupape auxiliaire de transvasement 24 à droite, les deux soupapes étant ouvertes, et détend ces gaz comburés en même temps, produisant ainsi un travail utile. La soupape d'échappement 7 du cylindre BP et la soupape auxiliaire de transvasement 23 à gauche sont fermées. Le piston 6 du cylindre HP à droite entame sa remontée pour chasser les gaz comburés à travers le canal de transvasement 17 vers le cylindre BP central tandis que le piston 4 du cylindre BP poursuit sa descente en direction de son PMB. A partir de ce moment, ce n'est plus que le piston du cylindre BP qui produit un travail utile, le piston 6 du cylindre HP à droite consommant du travail pendant sa remontée.

**Figures 10 et 10a.** Les manivelles des cylindres HP se trouvent à un angle égal à 275° par rapport à la position verticale haute. Le piston 5 du cylindre HP à gauche continue sa remontée et comprime le nouveau mélange air/combustible. Toutes les soupapes 8,9 du cylindre HP à gauche sont fermées. Le piston 4 du cylindre BP central se trouve proche de son PMB et entame sa remontée. La soupape d'échappement 7 du cylindre BP vient de s'ouvrir afin d'évacuer les gaz comburés contenus dans le cylindre BP en direction du système d'échappement. Le piston 6 du cylindre HP à droite continue sa remontée et continue à chasser les gaz comburés contenus dans le cylindre HP 3 à droite à travers la soupape d'échappement 11 à droite, le canal de transvasement 17 à droite et la soupape auxiliaire de transvasement 24 vers le cylindre BP, les deux soupapes étant ouvertes.

**Figures 11 et 11a, Figures 12 et 12a, Figures 13 et 13a et Figures 14 et 14a.** Un nouveau cycle démarre avec l'admission d'un nouveau mélange air/combustible dans le cylindre HP droit 3 et les différentes phases correspondent à celles décrites dans les Figures 7 et 7a, Figures 8 et 8a, Figures 9 et 9a et Figure 10 et 10a en inversant les côtés gauche et droit.

## Revendications

1.  Moteur à combustion interne du type comprenant au moins un cylindre qui comprend une chambre de travail de volume variable par le déplacement dans ce cylindre d'un piston entre une position de point mort haut et une position de point mort bas, à chaque tel cylindre étant associés des moyens d'admission et d'évacuation d'un fluide gazeux, le piston de chaque tel cylindre étant relié à un arbre vilebrequin dudit moteur, ce moteur utilisant:

    a) d'une part au moins un tel cylindre (1) fonctionnant en cylindre basse pression suivant un mode du type deux temps, qui comprennent l'admission accompagnée de la détente produisant un travail utile au cours de chaque course du piston de ce cylindre basse pression (1) vers son point mort bas et l'échappement d'un fluide gazeux au cours de chaque course du piston (4) vers son point mort haut, et

    b) d'autre part, deux tels cylindres (2, 3) fonctionnant en cylindres comburants haute pression suivant un mode du type quatre temps, qui comprennent l'admission de l'air ou d'un mélange air-combustible au cours de la première course du piston de chacun desdits cylindres comburants (2, 3) vers son point mort bas, la compression de l'air ou d'un mélange air-combustible au cours de la première course du piston vers son point mort haut, suivie de la combustion, la détente des gaz comburés au cours de la deuxième course du piston vers son point mort bas produisant un travail utile et le refoulement des gaz comburés au cours de la deuxième course du piston vers son point mort haut, la cylindrée de chacun des cylindres comburants (2, 3) étant inférieure à celle du cylindre basse pression (1), les cylindres comburants (2, 3) refoulant alternativement leurs gaz comburés vers le cylindre basse pression (1) en vue d'une deuxième détente des gaz comburés, **caractérisé en ce que** d'une part l'axe des cylindres haute pression (2 ; 3) est déplacé par rapport à l'axe du vilebrequin (12) de façon à ce que la manivelle (27), à laquelle est attachée la bielle (29) du piston (5 ; 6) dudit cylindre haute pression, se trouve du même côté, par rapport à l'axe du vilebrequin (12), que l'axe de ce cylindre haute pression (2 ; 3) au moment où ledit piston (5 ; 6), se trouvant à mi-chemin entre son point mort haut et son point mort bas, est en train de descendre et **en ce que** d'autre part l'axe du cylindre basse pression (1) est déplacé par rapport à l'axe du vilebrequin (12) de façon à ce quel la manivelle (26), à laquelle est attachée la bielle (28) du piston (4) du cylindre basse pression (1), se trouve du même côté, par rapport à l'axe du vilebrequin (12), que l'axe dudit cylindre basse pression (1) au moment où ledit piston (4), se trouvant à mi-chemin entre son point mort bas et son point mort haut, est en train de monter.

2.  Moteur à combustion interne selon la revendication 1, **caractérisé en ce qu'**il comporte deux rangées de trois cylindres en ligne, ces rangées formant un angle entre elles de 180° et se trouvant de part et d'autre d'un même vilebrequin unique à trois manivelles (26 ; 27), les deux manivelles se trouvant aux extrémités de ce vilebrequin (27) étant parallèles et reliées aux pistons (5 ; 6) des cylindres haute pression par les bielles correspondantes (29), la troisième manivelle (26) se trouvant au milieu et étant reliée aux pistons (4) des cylindres basse pression par les bielles (28) correspondantes, cette dernière manivelle (26) formant un angle d'environ 90° avec les deux autres manivelles (27), de sorte que les pistons (4) des cylindres basse pression atteignent leur point mort haut respectif sensiblement avant que les pistons (5 ; 6) des cylindres haute pression adjacents (2 ;3) n'atteignent leur point mort bas respectif.

**3.** Moteur à combustion interne selon la revendication 1 ou 2, **caractérisé en ce qu'**il comporte des canaux de transvasement qui comprennent chacun une soupape principale de transvasement (9; 11) et une soupape auxiliaire de transvasement, (23 ; 24) laquelle fonctionne comme soupape d'admission du cylindre basse pression, la soupape principale de transvasement (9 ; 11) et cette soupape auxiliaire de transvasement (23 ; 24) du canal de transvasement (16 ; 17) qui aboutit au cylindre haute pression correspondant (2 ; 3) étant configurées de manière que ladite soupape auxiliaire (23 ; 24) s'ouvre sensiblement avant que le piston (4) du cylindre basse pression n'atteigne son point mort haut, instant proche duquel va démarrer le transvasement des gaz comburés du cylindre haute pression correspondant (2 ; 3) à travers ledit canal de transvasement (16 ; 17) de sorte que ce canal de transvasement (16 ; 17) est mis sous pression par une partie des gaz comburés résiduels contenus dans le cylindre basse pression (1) avant que ne s'ouvre la soupape principale de transvasement (9 ; 11) fonctionnant comme soupape d'échappement dudit cylindre haute pression correspondant (2 ; 3) et obturant ledit canal de transvasement (16 ; 17) du côté de ce cylindre haute pression (2 ; 3) et sans que ne s'accroisse de manière trop importante la profondeur de la pochette de soupape (25) aménagée dans la surface supérieure du piston (4) du cylindre basse pression pour éviter tout contact entre la soupape auxiliaire de transvasement (23 ; 24) et le piston (4) du cylindre basse pression.

**4.** Moteur à combustion interne selon l'une des revendications 1 à 3, **caractérisé en ce que** le cylindre basse pression (1) comporte une ou plusieurs soupapes d'échappement (7) commandées par un arbre à cames tournant à la vitesse du vilebrequin.

**5.** Moteur à combustion interne selon la revendication 4, caractériel en ce que l'arbre à cames commandant les soupapes d'échappement du cylindre basse pression et tournant à la vitesse du vilebrequin est doté de masses d'équilibrage disposées et dimensionnées de manière à réduire les vibrations du moteur engendrées par d'autres masses existantes et se déplaçant à la fréquence de rotation du vilebrequin.

## Claims

**1.** An internal combustion engine of the type comprising at least one cylinder which includes a working chamber varying in volume with the reciprocation, in said cylinder, of a piston between a top dead centre position and a bottom dead centre position, with gaseous fluid intake and discharge means being associated with each such cylinder and the piston of each such cylinder being connected to a crankshaft of said engine, wherein the engine uses:

a) on the one hand, at least one such cylinder (1) operating as a low-pressure cylinder according to a two-stroke operation, which is comprised of intake accompanied by expansion, producing useful work during each stroke of the piston of said low-pressure cylinder (1) towards its bottom dead centre, and exhaust of a gaseous fluid during each stroke of the piston (4) towards its top dead centre; and

b) on the other hand, two such cylinders (2; 3) operating as high-pressure combustion cylinders according to a four-stroke operation, which is comprised of intake of air or an air-fuel mixture during the first stroke of the piston of each of said combustion cylinders (2; 3) towards its top dead centre, compression of the air or air-fuel mixture during the first stroke of the piston towards its top dead centre, followed by combustion, expansion of the combusted gases during the second stroke of the piston towards its bottom dead centre, producing useful work, and discharge of the combusted gases during the second stroke of the piston towards its top dead centre, wherein the volume of each of the combustion cylinders (2; 3) is smaller than that of the low-pressure cylinder (1), with the combustion cylinders (2; 3) discharging alternately their combusted gases towards the low-pressure cylinder (1) in view of a second expansion of the combusted gases, **characterised in that**, on the one hand, the axis of the high-pressure cylinders (2; 3) is displaced in relation to the axis of the crankshaft (12) in such a way that the crank (27), to which the tie rod (29) of the piston (5; 6) of said high-pressure cylinder is attached, is located on the same side, in relation to the axis of the crankshaft (12), as the axis of said high-pressure cylinder (2; 3) when said piston (5; 6), positioned halfway between its top dead centre and its bottom dead centre, is moving down, and, on the other hand, the axis of the low-pressure cylinder (1) is displaced in relation to the axis of the crankshaft (12) in such a way that the crank (26), to which the tie rod (28) of the piston (4) of the low-pressure cylinder (1) is attached, is located on the same side, in relation to the axis of the crankshaft (12), as the axis of said low-pressure cylinder (1) when said piston (4), positioned halfway between its bottom dead centre and its top dead centre, is moving up.

**2.** The internal combustion engine according to claim 1, **characterised in that** it comprises two banks of three in-line cylinders, wherein said banks form an angle of 180° with each other and are located on either side of a single three-crank crankshaft (26; 27), with the two cranks located at the ends of said crankshaft (27) being parallel and connected to the pistons (5; 6) of the high-pressure cylinders by the corresponding tie rods (29), and the third crank located in the middle being connected to the pistons (4) of the low-pressure cylinders by the corresponding tie rods (28), the latter crank (26) forming an angle of approximately 90° with the other two cranks (27), such that the pistons (4) of the low-pressure cylinders reach their respective top dead centres significantly before the pistons (5; 6) of the adjacent high-pressure cylinders (2; 3) reach their respective bottom dead centre.

**3.** The internal combustion engine according to claim 1 or 2, **characterised in that** it comprises discharge lines which each include a main discharge valve (9; 11) and an auxiliary discharge valve (23; 24) which operates as an intake valve of the low-pressure cylinder, wherein the main discharge valve (9; 11) and said auxiliary discharge valve (23; 24) of the discharge line (16; 17), which opens into the corresponding high-pressure cylinder (2; 3), is configured in such a way that said auxiliary valve (23; 24) opens significantly before the piston (4) of the low-pressure cylinder reaches its top dead centre, i.e. a time point close to the start of the discharge of the combusted gases of the corresponding high-pressure cylinder (2; 3) through said discharge line (16; 17) in such a way that said discharge line (16; 17) is pressurised by a portion of the residual combusted gases contained in the low-pressure cylinder (1) before the main discharge valve (9; 11) opens, operating as an exhaust valve of said corresponding high-pressure cylinder (2; 3) and blocking said discharge line (16; 17) on the side of said high-pressure cylinder (2; 3) and without too greatly increasing the depth of the valve pocket (25) arranged in the upper surface of the piston (4) of the low-pressure cylinder in order to avoid any contact between the auxiliary discharge valve (23; 24) and the piston (4) of the low-pressure cylinder.

**4.** The internal combustion engine according to one of claims 1-3, **characterised in that** the low-pressure cylinder (1) comprises one or several exhaust valves (7) controlled by a camshaft turning at the speed of the crankshaft.

**5.** The internal combustion engine according to claim 4, **characterised in that** the camshaft controlling the exhaust valves of the low-pressure cylinder and turning at the speed of the crankshaft is equipped with balance weights arranged and dimensioned in such a way as to reduce the vibrations of the engine generated by other existing weights and displacing at the rotational frequency of the crankshaft.

**Patentansprüche**

**1.** Verbrennungsmotor der mindestens einen Zylinder umfasst mit einer Arbeitskammer mit variablem Volumen dank der Bewegung eines Kolbens in diesem Zylinder zwischen einem unteren und einem oberen Totpunkt, wobei jeder solcher Zylinder mit Vorrichtungen zum Ein- und Auslassen eines Gases ausgestattet ist, und wobei der Kolben eines jeden solchen Zylinders mit der Kurbelwelle des besagten Motors verbunden ist, und wobei dieser Motor folgende Elemente umfasst :

a) einerseits mindestens einen solchen Zylinder (1) der als Niederdruckzylinder im Zweitaktverfahren arbeitet, bestehend aus Einlass im Verbund mit einer nützliche Arbeit produzierenden Expansion bei jedem Hub des Kolbens von diesem Niederdruckzylinder (1) hin zu seinem unteren Totpunkt und dem Ausstoßen bei jedem Hub des Kolbens (4) hin zu seinem oberen Totpunkt eines Gases, und

b) andererseits zwei solche Zylinder (2, 3) die als Hochdruckbrennzylinder gemäß einem Viertaktverfahren funktionieren, bestehend aus Einlass von Luft oder eines Luft-Kraftstoffgemischs im Verlauf des ersten Hubs des Kolben von jedem besagten Brennzylinder (2, 3) hin zu seinem unteren Totpunkt, die Verdichtung der Luft oder des Luft-Kraftstoffgemischs im Verlauf des erstens Hubs des Kolbens hin zu seinem oberen Totpunkt, gefolgt von der Verbrennung und der Expansion der Brenngase während des zweiten, eine nutzbare Arbeit produzierenden Hubs des Kolbens hin zu seinem unteren Totpunkt und das Ausstoßen der Brenngase im Verlauf des zweiten Hubs des Kolbens hin zu seinem oberen Totpunkt, wobei der Hubraum eines jeden Brennzylinders (2, 3) kleiner als dasjenige des Niederdruckzylinders (1) ist, und die Brennzylinder (2, 3) abwechselnd ihre Brenngase hin zum Niederdruckzylinder (1) im Hinblick auf eine zweite Expansion der Brenngase ausstoßen, **dadurch gekennzeichnet, dass** die Achse der Hochdruckzylinder (2;3) gegenüber der Achse der Kurbelwelle (12) derart verschoben ist, dass die Kurbel (27), an welche der Pleuel (29) des Hochdruckkolbens (5; 6) von besagtem Hochdruckzylinder (2;3) befestigt ist, sich in dem Moment wo besagter Kolben (5;6) sich auf halbem Weg zwischen seinem oberen und unteren Totpunkt abwärts bewegt, auf der gleichen Seite wie die Achse dieses Hochdruckzylinders (2;3) in Bezug auf die Achse der Kurbelwelle (12) befindet, und dass andererseits die Achse des Niederdruckzylinders (1) gegenüber der Achse der Kurbelwelle (12) derart verschoben ist, dass die Kurbel (26), an welche der Pleuel (28) des Kolbens (4) des Niederdruckzylinders (1) befestigt ist, sich in dem Moment wo besagter Kolben (4) sich auf halbem Weg zwischen seinem unteren und oberen Totpunkt aufwärts bewegt, auf der gleichen Seite wie die Achse dieses Niederdruckzylinders (1) in Bezug auf die Achse der Kurbelwelle (12) befindet.

2. Verbrennungsmotor gemäß Anspruch 1, **dadurch gekennzeichnet, dass** er zwei Reihen aus jeweils drei in Reihe angeordneter Zylinder umfasst, wobei diese Reihen unter sich einen Winkel von 180° bilden und einander gegenüber derselben Kurbelwelle (12) mit drei Kurbeln (26;27) angeordnet sind, die zwei sich an den Enden dieser Kurbelwelle befindenden Kurbel (27) parallel und mit den Kolben (5;6) der Hochdruckzylinder über die entsprechenden Pleuel (29) verbunden sind, die dritte, sich in der Mitte befindliche Kurbel (26) mit den Kolben (4) der Niederdruckzylinder über die entsprechenden Pleuel (28) verbunden sind, wobei diese letzte Kurbel (26) in etwa einen Winkel von 90° mit den beiden anderen Kurbeln (27) bildet, so dass die Kolben (4) der Niederdruckzylinder ihren jeweiligen oberen Totpunkt deutlich früher als die Kolben (5;6) der anliegenden Hochdruckzylinder (2;3) ihren jeweiligen unteren Totpunkt erreichen.

3. Verbrennungsmotor gemäß Anspruch 1 oder 2, **dadurch gekennzeichnet, dass** er über Überströmkanäle verfügt, die jeder mit einem Hauptüberströmventil (9;11) und einem Hilfsüberströmventil (23;24), das als Einlassventil des Niederdruckzylinders fungiert, ausgestattet sind; wobei das Hauptüberströmventil (9;11) und dieses Hilfsüberströmventil (23;24) des Überströmkanals (16;17), der im entsprechenden Hochdruckzylinder (2;3) mündet, derart konfiguriert sind, dass besagtes Hilfsventil (23;24) sich spürbar vor dem Zeitpunkt öffnet, an dem der Kolben (4) des Niederdruckzylinders seinen oberen Totpunkt erreicht, dem Zeitpunkt an dem der Beginn der Überströmung der Brenngase des entsprechenden Hochdruckzylinders (2;3) durch besagten Überströmkanal (16;17) kurz bevorsteht, so dass dieser Überströmkanal (16;17) mittels eines Teils der im Niederdruckzylinder (1) verbliebenen Restgase unter Druck gesetzt wird, noch bevor sich das Hauptüberströmventil (9;11) öffnet, das als Auslassventil des besagten entsprechenden Hochdruckzylinders (2;3) fungiert und das den besagten Überströmkanal (16;17) auf Seite dieses Hochdruckzylinders (2;3) verschließt und ohne dass die in der Oberfläche des Kolbens (4) des Niederdruckzylinders zwecks Vermeidung des Kontakts zwischen dem Hilfsüberströmventil (23;24) und dem Kolben (4) des Niederdruckzylinders eingelassenen Ventiltaschen (25) zu tief werden.

4. Verbrennungsmotor gemäß einem der Ansprüche 1 bis 3, **dadurch gekennzeichnet, dass** der Niederdruckzylinder (1) mit einem oder mehreren Auslassventilen (7) versehen ist, die mittels einer Nockenwelle gesteuert werden, die mit der gleichen Drehzahl wie die Kurbelwelle dreht.

5. Verbrennungsmotor gemäß Anspruch 4, **dadurch gekennzeichnet dass** die Nockenwelle, die die Auslassventile des Niederdruckzylinders steuert und mit der Drehzahl der Kurbelwelle dreht, mit Ausgleichsmassen versehen ist, die derart bemessen und angeordnet sind, dass die Vibrationen des Motors, die durch andere bestehende Massen, die sich mit der Drehfrequenz der Kurbelwelle bewegen, verringert werden.

Vilebrequin du moteur à combustion interne à cinq temps

**Figure 1**

Vilebrequin du moteur à combustion interne à quatre temps et demi

**Figure 1a**

Vue frontale, sans culasse

décalage HP

décalage BP

5

4

29

28

27

A    26

sens de rotation du vilebrequin

**Figure 2:** **Vue frontale (sans culasse)** -Décalages des axes des cylindres par rapport au vilebrequin et angle réduit entre manivelles haute pression d'une part et manivelle basse pression d'autre part

## Vue du dessus

**Figure 3:** Vue du dessus de la culasse, avec arrangement des soupapes et canaux de transvasement

**Figure 4:** Evolution des volumes dans les cylindres basse et haute pression pendant un tour de vilebrequin,l'angle *A* étant égal à 90°.

Rapport de détente globale en fonction de l'angle A entre manivelle HP et manivelle BP
A = 0°AV, càd. HP//BP ; A = 180°AV, càd. HP <> BP

**Figure 5:** Dépendance du rapport de détente globale de l'angle entre manivelle cyl. HP et manivelle cyl. BP, angle A (voir **Figure 2**).

Levée de soupape d'admission du cylindre BP

**Figure 6:** Levée de soupape de transvasement auxiliaire du cylindre BP avec « plateau »

Vue frontale (sans culasse)  Vue latérale

**Figures 7 et7a:** Vues du moteur avec vilebrequin à 5° après PMH admission cylindre haute pression gauche

Vue frontale (sans culasse)  Vue latérale

**Figures 8 et 8a:** Vues du moteur avec vilebrequin à 95° après PMH admission cylindre haute pression gauche

**Figures 9 et 9a:** Vues du moteur avec vilebrequin à **185°** après PMH admission cylindre haute pression gauche

**Figures 10 et 10a:** Vues du moteur avec vilebrequin à **275°** après PMH admission cylindre haute pression gauche

**Figures 11 et 11a:** Vues du moteur avec vilebrequin à **365°** après PMH admission cylindre haute pression

**Figures 12 et 12a:** Vues du moteur avec vilebrequin à **455°** après PMH admission cylindre haute pression

Vue frontale (sans culasse)

Vue latérale

**Figures 13 et 13a:** Vues du moteur avec vilebrequin à 545° après PMH admission cylindre haute pression

Vue frontale (sans culasse)

Vue latérale

**Figures 14 et 14a:** Vues du moteur avec vilebrequin à 635° après PMH admission cylindre haute pression

Légende:    Admission du mélange air/combustible

Compression du mélange air/combustible

Combustion

Transfert des gaz comburés du cyl. HP vers le cyl. BP

Echappement des gaz comburés

**Figure 15:** Légende pour la description du fonctionnement du moteur à combustion interne à quatre temps et demi à 2 fois 3 cylindres opposés avec vilebrequin à angle de 90° (Figures 16 à 19).

**Figure 16:** Fonctionnement du moteur à combustion interne à quatre temps et demi à 2 fois 3 cylindres opposés - Position du vilebrequin: **0°AV**

**Figure 17:** Fonctionnement du moteur à combustion interne à quatre temps et demi à 2 fois 3 cylindres opposés - Position du vilebrequin: **90°AV**

**Figure 18:** Fonctionnement du moteur à combustion interne à quatre temps et demi à 2 fois 3 cylindres opposés - Position du vilebrequin: **180°AV**

**Figure 19:** Fonctionnement du moteur à combustion interne à quatre temps et demi à 2 fois 3 cylindres opposés - Position du vilebrequin: **270°AV**

## RÉFÉRENCES CITÉES DANS LA DESCRIPTION

**Documents brevets cités dans la description**

- EP 1201892 A, Gerhard Schmitz
- US 6553977 B